# EUROPEAN PATENT APPLICATION

(11) **EP 1 576 912 A2**
(43) Date of publication of application: **21.09.2005**
(21) Application number: 04078291.4
(22) Date of filing: 01.12.2004
(51) Int. Cl.: A47J 31/06

(54) **Beverage filter cartridge and filter basket assembly**

(30) Priority: 15.03.2004 CN 93203904
(71) Applicant: I-Ray SU, Taiwan (CN)
(72) Inventor: I-Ray SU, Taiwan (CN)
(74) Representative: Meissner, Peter E.

(57) **Abstract**

A beverage filter cartridge and basket assembly for a beverage-making machine is provided. The beverage filter cartridge and basket assembly comprises a disposable beverage filter cartridge comprising a container for containing beverage powder and a filter paper bounded to an opening of the container, wherein a plurality of through holes are formed in a bottom of the container and a filter paper (33) is bounded to an inner face of the bottom of the container; and a cup-shaped basket (40) for accommodating the beverage filter cartridge (32). The cup-shaped basket comprising: (a) a coupling portion (41) formed at an upper periphery of the basket for coupling to a filter holder of the beverage making machine to prevent sideway leakage; (b) a plurality of concentrical ridges (42) formed on an inner surface of a bottom of the basket; (c) a circular screen (44) recessed at the center of the bottom of the basket and having a plurality of screen holes radiantly formed in the bottom of the basket; and (d) a plurality of guiding trenches (43) radiantly formed in the bottom of the basket.

## Description

### Field of the Invention

The present invention relates generally to a beverage filter cartridge and filter basket assembly and, more specifically, to an improved beverage filter cartridge and filter basket to enhance flavor extraction from the beverage content of the cartridge in an express and easy way.

### Background of the Invention

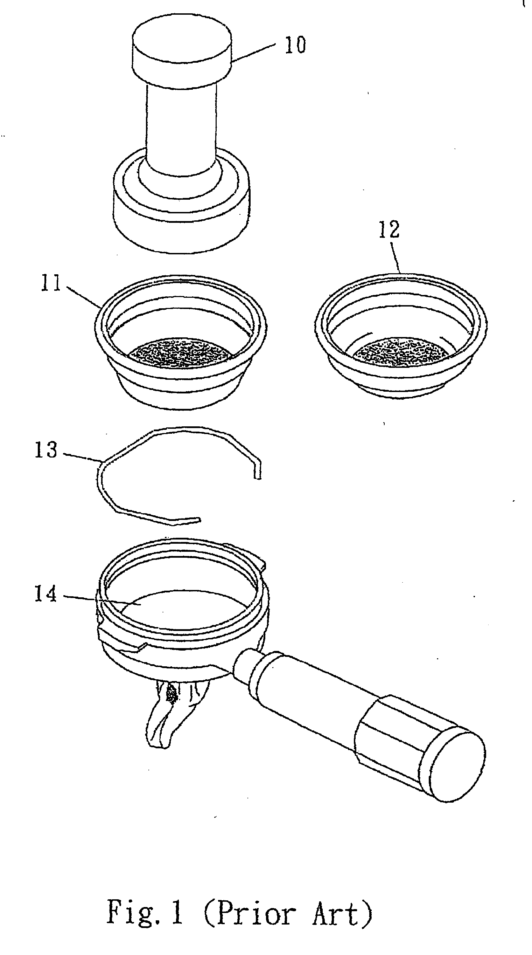

Fig. 1 is an exploded perspective view of a coffee extracting filter assembly of a traditional pressurized-stuffing type espresso coffee machine. This assembly consists of a stainless steel made filter 11 (or 12), a filter holder 14 and a spring clip 13. For making an espresso coffee, fine-grinded coffee powders are stuffed in the single basket filter 11 or the double basket filter 12 by a stuffer 10, then the stuffed filter is placed in a filter body of the filter holder 14 and coupled thereto by the spring clip 13. Then, the filter holder 14 is locked to a group head (not shown) of the espresso coffee machine and high pressure hot water is applied through a group head screen (not shown) to the coffee powders contained in the filter 11 (or 12) to extract the coffee.

This type of coffee making process has numerous disadvantages. For example, the quality of the coffee is not consistent and grinded powders are easily spoiled. Flavor inconsistency may comes from inaccurate amount of the coffee powders, stuffing operation being inexact, and the particle size of the coffee powders not uniform etc. When the quality of the extracted coffee is unacceptable, it has to be discarded and thus contribute to material wastage. In addition, after one extracting operation, incorrect cleaning operation of the group head and the group head screen will cause water being trapped between the filter and filter body of the filter holder and in turn wet a working platform of a grinding machine while stuffing coffee powders for net operation. Moreover, after a continuous operation, coffee powder residues stack on the group gasket will cause scratches and cracks, which eventually will cause a sideway leakage, because the filter holder is unable to water tightly lock to the group head of the espresso coffee machine.

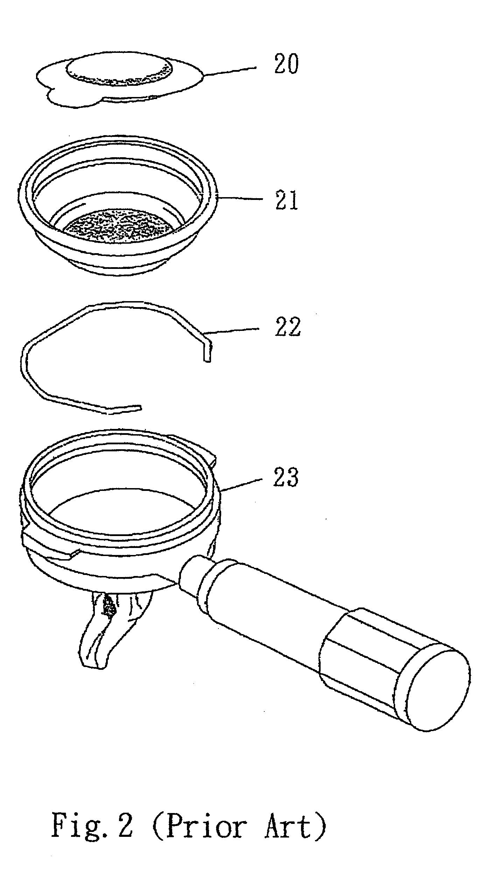

Fig. 2 is an exploded perspective view of a coffee extracting filter assembly of a traditional non-pressurized-stuffing type espresso coffee machine. This filter assembly is designed for use with a specialized disposable coffee pod 20 which consists of an upper filter paper and a lower filter paper with coffee powders being pressurized stuffed and sealed between the upper and lower filter papers. This filter assembly comprises a metal basket 21 for accommodating the coffee pod 20, a filter holder 23 and a spring clip 22. While making espresso coffee, a coffee pod 20 is placed in the basket 21, and then the basket 21 is placed in a filter body of the filter holder 23 and coupled thereto by the spring clip 22. The filter holder 23 is then locked to a group head (not shown) of the espresso coffee machine and high pressure hot water is applied through a group head screen (not shown) to the coffee powders contained in the coffee pod 20 coffee extraction.

Although the coffee extracting technique illustrated in Fig. 2 may mitigate or eliminate the problems of coffee extracting technique illustrated in Fig. 1 (e.g., extracting operation too complicate and cumbersome, the inconsistency in quality of the extracted coffee, and wasting materials and time), yet second coffee extracting technique has its own disadvantages. Specifically, the coffee powders are tightly packed between the filter papers and no space is left for the coffee powders to expand and to develop different flavors contained in the coffee powders, thus during a high pressure and fast extracting operation, such as the extracting operation performed in a espresso coffee machine, the flavor of the coffee is relatively dull and plain. Thus, when using the pod, the function of the espresso coffee machine is limited to make espresso coffee only, and is not capable of performing other functions of making single-taste coffees, such as blue-mount coffee, and/or other type of beverages, such as tea, which need space to expand and to develop flavors during extraction.

In view of the inconvenience and drawbacks in existing coffee and/or beverage making techniques, there exist a need for an improved coffee and/or beverage filter cartridge and basket assembly which can make a variety of beverages, such as coffee and tee, in a simple and fast operation with a stable and satisfaction quality.

### Summary of the Invention

Accordingly, the object of the present invention is to provide an immersible and disposable beverage filter cartridge which is different from traditional coffee pod for the quantity of the beverage powder contained therein may be adjusted, and a basket for the cartridge such that the beverage powder contained in the cartridge may be extracted by using the non-stuffing extracting method mentioned above to thereby simplifying the beverage making operation, diversifying the beverage flavors, and overcoming the material wasting problem.

To achieve these objectives and others, a beverage filter cartridge and basket assembly for a beverage-making machine, such as an espresso coffee machine, is provided. The beverage filter cartridge and basket assembly according to the present application comprises:
a disposable beverage filter cartridge comprising a container for containing beverage powder and a filter paper bounded to an opening of the container, wherein a plurality of through holes are formed in a bottom of the container and a filter paper is bounded to an inner face of the bottom of the container; and a cup-shaped basket for accommodating the beverage filter cartridge, the cup-shaped basket comprising: (a) a coupling portion formed at an upper periphery of the basket for coupling to a body of the beverage making machine to prevent sideway leakage, (b) a plurality of concentrical ridges formed on an inner surface of a bottom of the basket, (c) a circular screen recessed at the center of the bottom of the basket and having a plurality of screen holes radiantly formed in the bottom of the basket, and (d) a plurality of guiding trenches radiantly formed in the bottom of the basket.

According to another aspect of the present invention, the container further comprises a filtering cap fixed to the opening of the container with a plurality of filtering holes formed in the cap.

It is to be appreciated that both the forging general description and the following detailed description are exemplary and explanatory and are intended to provide further explanations of the invention as claimed.

### Brief Description of the Drawings

The accompanying drawings, which are included to provide further understanding of the invention and are incorporated in and constitute a part of the specification, illustrate embodiments of the invention and together with the description serve to explain the principle of the invention. In the drawings,
Fig. 1 is an exploded perspective view of a coffee extracting filter assembly of a traditional pressurized-stuffing type espresso coffee machine;
Fig. 2 is an exploded perspective view of a coffee extracting filter assembly of a traditional non-pressurized-stuffing type espresso coffee machine;
Fig. 3 is an exploded perspective view of the beverage filter cartridge and basket assembly according to the present invention;
Fig. 3a is a cross-sectional view of the beverage filter cartridge according to a first embodiment of the present invention;
Fig. 3b is a cross-sectional view of the beverage filter cartridge according to a first embodiment of the present invention;
Fig. 4 a cross-sectional view of the beverage filter cartridge and basket assembly coupled to a filter holder of a coffee making machine.

### Detailed Description of the Invention

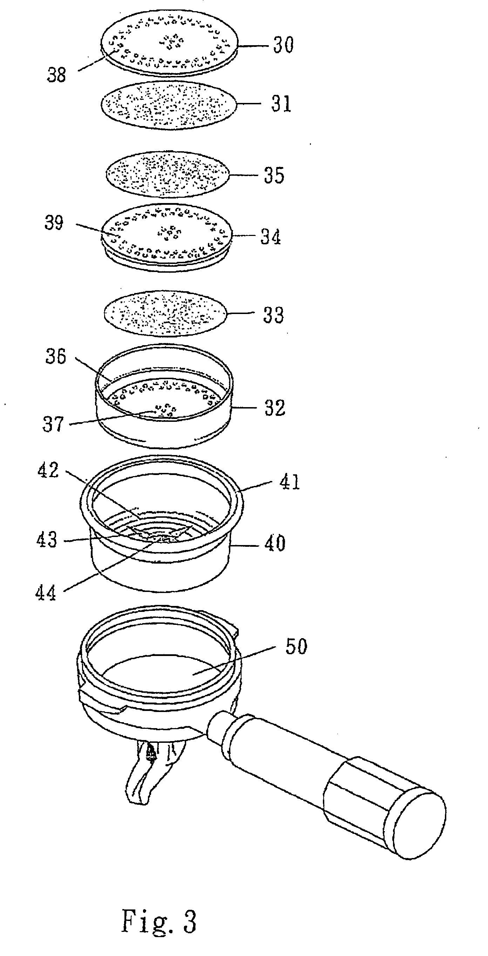

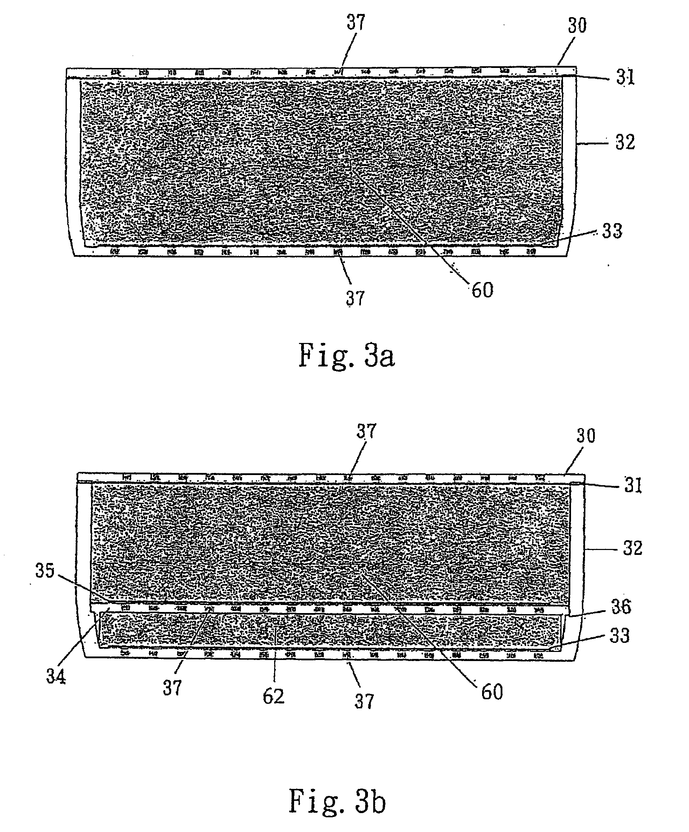

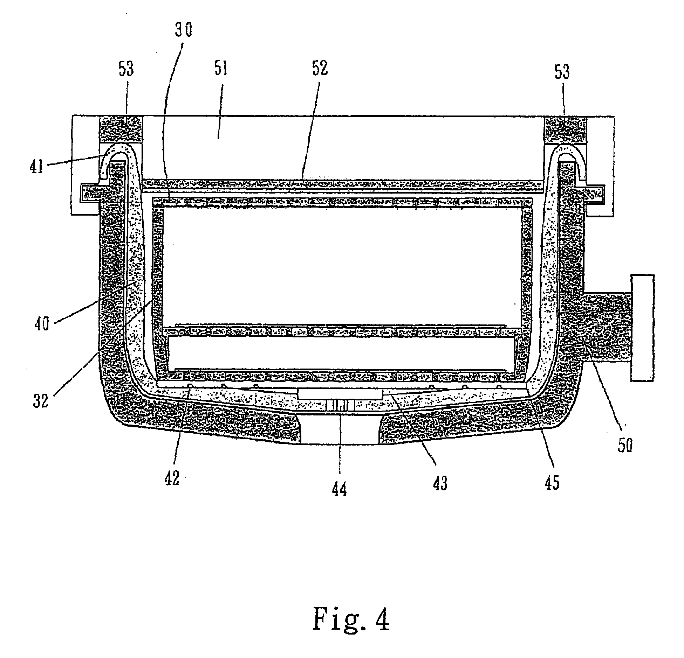

Referring now to Figs. 3, 3a, 3b, and 4 in which an embodiment of the present invention is illustrated to describe the beverage filter cartridge and basket assembly of the present invention.

Referring firstly to Figs. 3 and 3a, the beverage filter cartridge and basket assembly according to one embodiment of the present invention includes a circular cup-shaped container 32 for containing beverage materials, such as coffee powders and tee powders. The container 32 has a plurality of holes 37 formed in a bottom thereof and arranged in a pattern that has a central holes-group and a peripheral holes-group, and a filter paper 33 bounded to an inner surface of the bottom so that the beverage materials can be immersed completely and the impurities can be filtered. The beverage filter cartridge further includes a filtering cap 30 attached to an opening of the container. The filtering cap 30 has a filter paper 31 bounded to an inner face thereof and has a plurality of holes 38 formed therein and arranged in a pattern that has a central holes-group and a peripheral holes-group so as to evenly disperse the water over the cap 30 and reduce the water pressure.

Fig. 3b illustrates another embodiment of the beverage filter cartridge with which the beverage-making machine, such as an espresso coffee machine, is capable of providing a variety of flavors of the beverage. As shown in Fig.3b, an inner flange 36 is formed on an inner surface of a sidewall of the container 32 and a partition filtering plate 34 is disposed on the inner flange 36. The partition filtering plate 34 has a plurality holes 39 formed therein and arranged in a pattern that has a central holes-group and a peripheral holes-group, and a filter paper 35 bounded to an upper surface thereof. In this embodiment, the partition filtering plate 34 disposed on the inner flange 36 divides an inner space of the container into an upper space 60 which is between the filtering cap 30 and the partition filtering plate 34, and a lower space 62 which is between the partition filtering plate 34 and the bottom of the container. As illustrated in Fig. 3b, the upper space 60 is larger than the lower space 62 and is used to contain beverage powders, such as espresso coffee powder, tea powders, and the like, and the lower space 62 is used to contain flavoring materials, such as sugar, dried dairy products, etc. The contents of the upper space 60 and the lower space 62 may be selectively varied according to customer's special needs.

The container of the beverage filter cartridge is made of food-grade plant fiber pulp which can withstand an extracting steam pressure up to 8-15 bar and a temperature up to 90-92 ? without deforming and/or generating any substance from the container to spoil the extracted flavor. In addition, the filter papers 31, 33, and 35 are made of food-grade, refractory non-woven fabric filter paper.

Referring now to Fig. 3 to describe the basket 40 for the beverage filter cartridge. The basket 40 is designed to adapt the disposable beverage filter cartridge of the present invention to a filter holder 50 of an existing espresso coffee machine. The basket 40 is in a form of an U-shaped cup, which is integrally formed from a food-grade refractory material which can withstand high temperature, such as, for example, food-grade refractory silicon rubber. The basket 40 also has a coupling portion 41 formed at an upper periphery of the basket for coupling to the filter body 50 of the espresso coffee machine to prevent sideway leakage; a plurality of concentrical ridges 42 formed on an inner surface of a bottom of the basket 40; a circular screen 44 recessed at the center of the bottom of the basket and having a plurality of screen holes radiantly formed in the bottom of the basket; and a plurality of guiding trenches 43 radiantly formed in the bottom of the basket.

Referring now to Fig. 4 to the use and operation of the beverage filter cartridge and basket assembly of the present invention.

While making coffee with the traditional techniques illustrated in Figs. 1 and 2, a stainless steel made rigid filter 11, 12, and 21 is used and after coffee powders are stuffed or a coffee pod 20 is placed in the filter, the filter is placed in a filter holder 14, 23 of the espresso coffee machine and the filter holder is in turn coupled to a group head of the espresso coffee machine. However, making coffee in these two traditional ways give the coffee powders no sufficient space to expand and the expansion of the contents of the filter is restrained. Although these traditional methods can extract the crema of espresso coffee, yet it tends to make coffee with dull flavor.

While using the beverage filter cartridge and basket assembly of the present invention to a traditional espresso coffee machine, the filter and spring clip of the traditional espresso coffee machine are no longer needed, that is, the traditional filter and spring clip are replaced with the beverage filter cartridge and basket assembly of the present invention. Specifically, as shown in Fig. 4, when using the beverage filter cartridge and basket assembly of the present invention to a traditional espresso coffee machine, the basket 40 of the present invention is firstly placed in the filter holder 50 with the coupling portion 41 tightly engaging with a rim of the filter holder, then the beverage filter cartridge is placed in the basket 40 and held in position by a circular cut-off 45 formed at the inner lower portion of the basket 40. Then, the filter holder 50 with the beverage filter cartridge and basket assembly of the present invention accommodated therein is coupled to a group head 51 of the espresso coffee machine. At this coupled state, the filtering cap 30 of the beverage filter cartridge is adjacent to a group head water dispensing screen 52 and when the water steam is applied to the beverage filter cartridge and basket assembly in the filter holder 50, the steam pressure may be buffered by the concentrical ridges 42 formed on an inner surface of the bottom of the basket 40. In addition, as the filter head 50 being coupled to the group head 51 a seal gasket 53 of the group head 51 will firmly press the coupling portion 41 against the rim of the filter holder 50 to thereby providing leakage-proof coupling and a sideway leakage between the filter holder 50 and the group head 51 is therefore prevented.

Moreover, the water coming out from the holes 37 of the container 32 will be buffered by the planer portions of the bottom of the basket 40 which have no guiding trenches 43 formed therein and thus create a swirl flow in the container 32 to allow the beverage powders have more time to be immersed and to develop the flavors. Then, the extracted beverage fluid is collected via the guiding trenches 43 and drips out of the basket 40 through the screen holes of the screen 44.

The present invention provides a number of improvements over the traditional coffee making techniques. With the use of the beverage filter cartridge and filter basket assembly, the existing espresso coffee machine is capable of making a wide variety of beverages, such as espresso coffee, single-taste coffee, tea, etc., with different quantities, such as single or double basket, and different flavors by simply selecting a beverage filter cartridge having a desired type of beverage with the right amount of powder and powder size. Additionally, since the beverage filter cartridges are provided by material suppliers and come with all kinds of beverages of various flavors and quantified continents, the beverage making operation is thus simplified, shortened, and the material wastage may be eliminated and the quality of the beverage is thus made is stable and satisfied.

This invention has been disclosed in terms of specific embodiments. It will be apparent that many modifications can be made to the disclosed structures without departing from the invention. Therefore, it is the intent of the appended claims to cover all such variations and modifications as come within the true spirit and scope of this invention.

## Claims

1. A beverage filter cartridge and basket assembly for a beverage-making machine, the beverage filter cartridge and basket assembly comprising:
a disposable beverage filter cartridge comprising a container for containing beverage powder and a filter paper bounded to an opening of the container, wherein a plurality of through holes are formed in a bottom of the container and a filter paper is bounded to an inner face of the bottom of the container; and
a cup-shaped basket for accommodating the beverage filter cartridge, the cup-shaped basket comprising:
(a) a coupling portion formed at an upper periphery of the basket for coupling to a filter holder of the beverage making machine to prevent sideway leakage;
(b) a plurality of concentrical ridges formed on an inner surface of a bottom of the basket;
(c) a circular screen recessed at the center of the bottom of the basket and having a plurality of screen holes radiantly formed in the bottom of the basket; and
(d) a plurality of guiding trenches radiantly formed in the bottom of the basket.

2. A beverage filter cartridge and basket assembly according to claim 1, wherein the container further comprising: an inner flange extending from an inner surface of a sidewall of the container, and a partition filtering plate resting on the inner flange for dividing an inner space of the container into an upper space and a lower space for accommodating different contents respectively, wherein the partition filtering plate has a plurality holes formed therein and a filtering paper bounded thereto.

3. A beverage filter cartridge and basket assembly according to claim 1, wherein the container further comprising a filtering cap fixed to the opening of the container with a plurality of filtering holes formed in the cap.

4. A beverage filter cartridge and basket assembly according to claim 3, wherein the plurality of screen holes in the bottom of the container and the plurality filtering holes in the filtering cap are arranged in a pattern having a central holes-group and a peripheral holes-group.

5. A beverage filter cartridge and basket assembly according to claim 2, wherein one of the upper and lower spaces of the container is used to contain beverage powders and the other one of the upper and lower spaces of the container is used to contain flavoring materials.

6. A disposable beverage filter cartridge comprising:
a container for containing beverage powder; and
a filter paper bounded to an opening of the container, wherein a plurality of through holes are formed in a bottom of the container and a filter paper is bounded to an inner face of the bottom of the container.

7. A disposable beverage filter cartridge according to claim 6, wherein the container further comprising: an inner flange extending from an inner surface of a sidewall of the container, and a partition filtering plate resting on the inner flange for dividing an inner space of the container into an upper space and a lower space for accommodating different contents respectively, wherein the partition filtering plate has a plurality holes formed therein and a filtering paper bounded thereto.

8. A disposable beverage filter cartridge according to claim 6, wherein the container further comprising a filtering cap fixed to the opening of the container with a plurality of filtering holes formed in the cap.

9. A disposable beverage filter cartridge according to claim 8, wherein the plurality of screen holes in the bottom of the container and the plurality filtering holes in the filtering cap are arranged in a pattern having a central holes-group and a peripheral holes-group.

10. A cup-shaped basket for accommodating a disposable beverage filter cartridge claimed in claim 6 comprising:
(a) a coupling portion formed at an upper periphery of the basket for coupling to a filter holder of the beverage making machine to prevent sideway leakage;
(b) a plurality of concentrical ridges formed on an inner surface of a bottom of the basket;
(c) a circular screen recessed at the center of the bottom of the basket and having a plurality of screen holes radiantly formed in the bottom of the basket; and
(d) a plurality of guiding trenches radiantly formed in the bottom of the basket.
